# DEMANDE DE BREVET EUROPEEN

(11) **EP 0 689 764 A1**
(43) Date de publication de la demande: **03.01.1996**
(21) Numéro de dépôt: 95490022.1
(22) Date de dépôt: 28.06.1995
(51) Int. Cl.: A01K 83/06

(54) **Monture à poisson vif**

(30) Priorité: 30.06.1994 FR 9408311
(71) Demandeur: Corradi, Gabriel, agissant comme Gérant de la Société, HOOKSAN EURL, en formation, F-02200 Soissons (Aisnes) (FR)
(72) Inventeur: Corradi, Gabriel, F-02205 Soissons, Aisne (FR)
(74) Mandataire: Duthoit, Michel

(57) **Abrégé**

L'invention est relative à une monture à poisson vif (4), comportant au moins un hameçon en liaison avec des moyens d'attelage du vif (4) sur une ligne (5).

Elle est caractérisée en ce que les moyens d'attelage sont constitués par une épingle formée d'une tige conformée pour définir deux branches (9, 10) dont une première (9) est destinée à être enfilée dans l'une des narines (11) du vif pour ressortir par le dessous de sa bouche (12) à sa partie arrière (10a), tandis que la seconde libre (10) porte à son extrémité libre des moyens de fermeture (14) de ladite épingle sur elle-même, mis en oeuvre après attelage du vif (4).

## Description

La présente invention concerne une monture à poisson vif destinée à servir d'appât dans la pêche au poisson carnassier.

Ce type de monture comporte d'une part un hameçon à une ou plusieurs contre-pointes ou ardillons, destinés à ferrer le carnassier et d'autre part des moyens d'attelage du vif sur une ligne, en liaison avec ledit hameçon.

La pêche au vif présente une difficulté majeure qui consiste précisément à maintenir vivant le poisson qui va servir d'appât, malgré les manipulations dont il fait l'objet lors de son attelage sur la ligne et plus particulièrement lorsque cette opération est réalisée par l'intermédiaire d'un des ardillons d'un hameçon multiple.

En effet, cette pratique blesse immanquablement le poisson car l'ardillon de l'hameçon est une pointe acérée en forme de crochet pointu élargi à sa base, qui est dirigé dans le sens d'introduction dans la bouche du poisson. Ceci provoque non seulement une incision des chairs dans le sens d'introduction du crochet, mais également des déchirures dans le sens inverse, qui auront lieu lorsque le poisson frétillera ou se débattra au bout de la ligne, notamment au cours du lancer.

Par ailleurs, il est recommandé lors de l'attache du vif à l'hameçon, si l'on ne veut pas lui voir rendre l'âme dans la demi-heure, de lui passer l'hameçon dans les deux lèvres afin de laisser au poisson un mouvement normal de la bouche et corrélativement de régler le problème de la respiration, le mouvement de la bouche étant en corrélation avec le battement des ouies.

Si l'hameçon ne passe que par une lèvre et ressort par la bouche, l'on comprend bien que la fermeture de cette dernière est imparfaite et conduira très vite le poisson au coma.

De plus, lors des lancers de la ligne, le vif est soumis à un moment difficile avec des jets de 25 à 50 mètres, car il risque d'être blessé par l'hameçon qui a beaucoup d'aisance, ou par les plombs qui lui tomberont dessus.

Tout cela explique que bien souvent il faut attendre quelques minutes après le lancer de la ligne pour voir la ligne, pêcher correctement avec les signes d'un vif qui remue et nage normalement parce que le vif était assommé à l'arrivée sur l'eau.

Tout cela démontre que la pêche au vif est un art difficile surtout vis-à-vis de certains carnassiers très méfiants comme le sandre qui ne se laisse pas plus berner par les leurres mécaniques, souples ou leurres tournants et ondulants, que par des techniques utilisant des appâts plus naturels comme dans la pêche au poisson mort "au posé" ou à "la tirette" et même dans la pêche au "poisson mort manié".

En effet, le mouvement d'un poisson mort discrètement animé par un pêcheur aussi expert soit-il, ne leurre pas un poisson carnassier comme le sandre.

Il en est de même de la nage cahotique d'un poisson vivant mais blessé ou assommé au cours de son attelage sur la ligne ou au cours de son lancer, qui suscitera la méfiance d'un carnassier intelligent de l'espèce précitée.

En outre, il faut également être conscient du fait que si le poisson blessé finit par mourir, il faudra le remplacer par un autre si l'on ne veut pas risquer d'attendre longtemps une prise hypothétique. Ceci nécessite par conséquent d'avoir une réserve suffisante de vifs de remplacement. Ce remplacement est également nécessaire lorsque le pêcheur désire se poster à un endroit plus éloigné qui l'oblige à sortir de l'eau. En effet, il est alors impensable de retirer l'hameçon du poisson pour le récupérer, car l'ardillon arrachera certaines de ses parties vitales, ce qui aura pour conséquence de provoquer sa mort.

Fort de ces diverses expériences et constatations, la majorité des pêcheurs s'accorde à dire que seule la pêche au vif est réellement efficace dans la pêche au carnassier, qu'elle s'effectue de manière itinérante ou en poste fixe, mais que la grande difficulté à surmonter c'est précisément de conserver le vif effectivement vivant tout au long de la partie de pêche, non seulement pour réaliser une bonne pêche mais également pour limiter le nombre de vifs à emporter ou, qu'il soit tout au moins en rapport avec les prises qui auront lieu.

La présente invention a précisément pour objectif de remédier aux inconvénients précités, plus particulièrement de permettre l'attelage d'un vif sur une ligne sans le tuer, ni même le blesser.

A cet effet, l'invention concerne une monture à poisson vif, destinée notamment à servir d'appât dans la pêche au poisson carnassier, comportant au moins un hameçon en liaison avec des moyens d'attelage du vif sur une ligne, est caractérisée en ce que les moyens d'attelage sont constitués par une épingle formée d'une tige conformée pour définir deux branches dont une première est destinée à être enfilée dans l'une des narines du vif pour ressortir par le dessous de sa bouche à sa partie arrière tandis que la seconde libre porte à son extrémité libre des moyens de fermeture de ladite épingle sur elle-même, mis en oeuvre après attelage du vif.

L'introduction de l'épingle par une narine du poisson ne le fait pas saigner et en la faisant ressortir par une zone arrière de la bouche, celui-ci est bien tenu et absolument pas blessé.

En effet, cette partie de la bouche est constituée de peaux transparentes sans choisir, légèrement cartilagineuses assurant ainsi une bonne accroche de l'épingle sans risque d'arrachement des chairs tant au bénéfice du poisson qui est respecté, que du pêcheur qui dispose d'un appât conservant tout son naturel et donc son efficacité tout au long de la partie de pêche.

Egalement grâce à la monture selon l'invention, lors des lancers, le poisson est hors de portée des pointes de l'hameçon qui peut être situé à distance car dissocié des moyens d'attelage, en l'occurence l'épingle.

C'est ainsi qu'il a été constaté que les vifs attelés de cette façon duraient 5 à 10 fois plus longtemps en bonne condition physique. Il a pû ainsi être constaté qu'un même vif ayant navigué toute une journée dans une zone neutre, a pu être récupéré le soir en le dételant de la ligne sans blessure, et réutilisé le lendemain, bien vivant.

En résumé, les avantages procurés par une monture selon l'invention sont les suivants :
- le vif est attelé à la ligne sans être blessé,
- le vif est lancé sans risque d'être blessé lors du vol et de l'atterrissage par la ou les pointes d'hameçons,
- la position de l'hameçon reste toujours en place idéale en cas d'attaque du carnassier,
- dans le cas de pêche itinérante, l'on peut se déplacer à plusieurs centaines de mètres, il suffit de récupérer le vif en le dételant de la ligne, chose simple qui est effectuée sans risque de blessure pour le vif, remettre le vif dans le vivier et l'installer à nouveau sur le ligne à la nouvelle place,
- la position en nage du poisson vivant avec cette monture reste horizontale, car en fait le poisson s'articule autour d'un axe sensiblement vertical et globalement perpendiculaire à son axe longitudinal.

D'autres caractéristiques apparaîtront au cours de la description qui va suivre, donnée à titre d'exemple non limitatif, et effectuée en regard des dessins annexés sur lesquels :
- la figure 1 est une vue en perspective d'une monture selon l'invention mise en place sur un poisson vif,
- les figures 2 à 8 représentent des variantes de montures différant essentiellement par rapport à celle de la figure 1 au niveau de l'hameçon proprement dit.

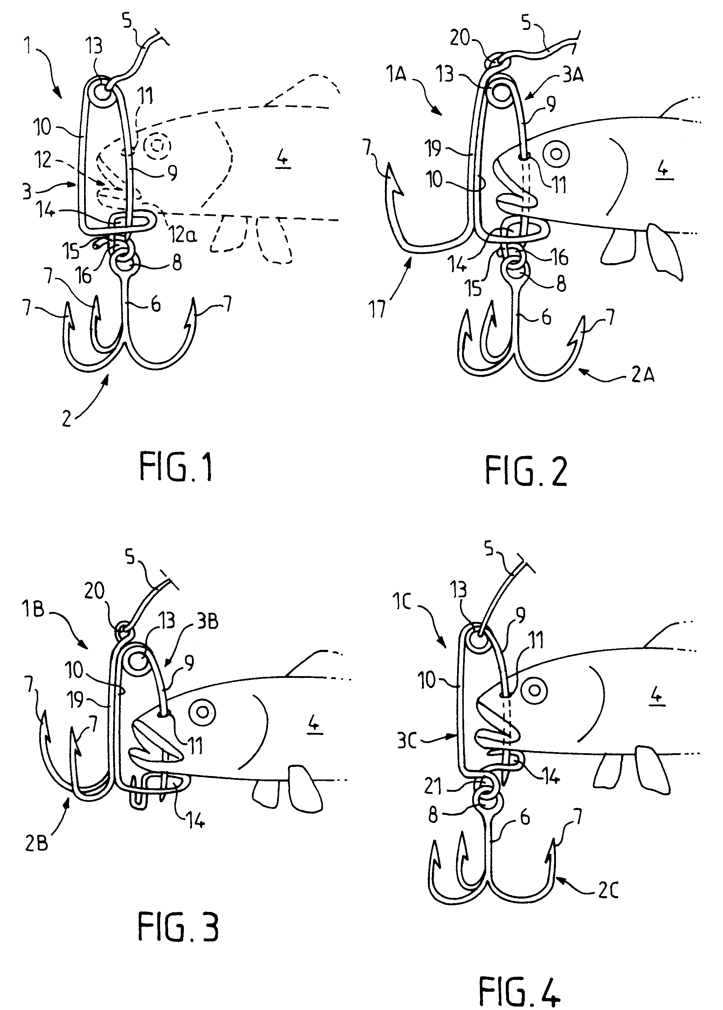

La monture 1 désignée globalement sur la figure 1 se décompose en deux parties essentielles : un hameçon 2 et des moyens d'attelage 3 du vif ou poisson 4 sur une ligne 5.

L'hameçon 2 est constitué selon le présent exemple par une hampe 6 de l'extrémité inférieure de laquelle sont issus trois ardillons 7 destinés à ferrer un carnassier au cours de la pêche.

L'hameçon 2 forme également à la partie supérieure de la hampe 6, un oeillet 8 formant une liaison articulée avec les moyens d'attelage 3. Ceux-ci sont constitués selon le principe général de l'invention par une épingle 3 formée par une fine tige métallique conformée pour définir deux branches 9 et 10 dont un première 9 est destinée à être enfilée dans l'une des narines 11 du vif 4 pour ressortir par le dessous de sa bouche 12 à sa partie arrière 12a. L'extrémité libre de la branche 9 est acérée pour faciliter son passage.

La seconde branche 10 de l'épingle 3a est libre et porte à son extrémité libre des moyens de fermeture de ladite épingle sur elle-même qui sont actionnés après attelage du vif 4 sur la branche 9.

Préférentiellement, la tige métallique formant l'épingle 3 décrit dans une zone sensiblement centrale au moins une spire 13 formant ressort de laquelle sont issues les branches 9 et 10 et destinée également à l'amarrage de la ligne 5.

Toujours selon la figure 1, les moyens de fermeture précités de l'épingle 3 sont constitués par une zone recourbée de l'extrémité libre de la seconde branche 10 pour former une boucle ouverte 14 formée dans un plan perpendiculaire à celle-ci.

L'ouverture de la boucle 14 est dirigée dans un sens tel à permettre l'introduction de l'extrémité de la première branche 9 par pression élastique puis sa retenue après relâchement de ladite pression.

La liaison de l'hameçon 2 à l'épingle 3 s'effectue selon le présent cas de figure par un prolongement perpendiculaire 15 de la boucle de fermeture 14, dirigé vers le bas et se terminant par une queue vrillée 16 destinée à l'amarrage et à la retenue de l'oeillet 8 de l'hameçon 2.

La monture 1a représentée sur la figure 2 diffère essentiellement de la précédente en ce qu'elle comporte en outre un hameçon supplémentaire 17 à un ardillon unique 7 dont la hampe 19 est rendue solidaire de la seconde branche 10 de l'épingle 3a, par tous moyens. Dans ce cas la ligne 5 est amarrée par une boucle 20 réalisée à l'extrémité de la hampe 19 opposée à l'ardillon 7. Bien entendu, cet amarrage peut être effectué dans la spire 13 de l'épingle 3a, comme précédemment.

Selon la variante de réalisation représentée à la figure 3, la monture 1b diffère de la précédente la en ce qu'elle ne comporte plus d'hameçon, suspendu à l'épingle, mais en revanche, l'hameçon 17 précité est redoublé pour définir deux ardillons 7 et former un nouveau hameçon 2b.

La monture 1c représentée sur la figure 4 diffère essentiellement de celle de la figure 1 en ce que la seconde branche 10 de l'épingle 3c comporte au moins une spire intermédiaire 21 formée entre sa spire ressort 13 et sa boucle de fermeture 14. Cette spire 21 est destinée à l'amarrage et à la retenue de l'oeillet 8 réalisé à l'extrémité libre de la hampe 6 de l'hameçon 2c. Dans ce cas, la spire 16 n'existe plus.

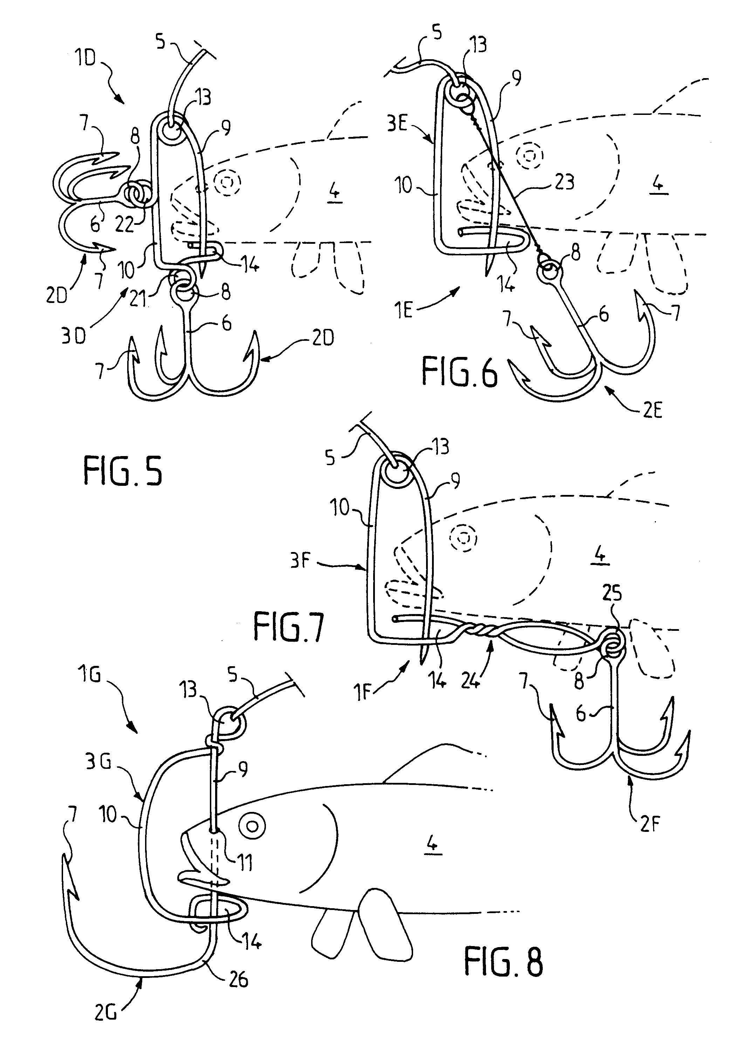

La monture 1d représentée sur la figure 5 diffère essentiellement de celle de la figure 4 en ce que la branche 10 de l'épingle 3d comporte une spire supplémentaire 22 destinée à la fixation et à l'articulation d'un second hameçon 2d.

La monture 1e représentée sur la figure 6 diffère des précédentes en ce que l'hameçon 2e est relié à l'épingle 3e par l'intermédiaire d'un avançon 23 en fil souple reliant l'oeillet 8 de la hampe 6 de l'hameçon 2e à la spire 13 de l'épingle 3e.

La monture 1f représentée sur la figure 7 diffère des précédentes en ce que l'hameçon 2f est relié à l'extrémité d'un avançon rigide 24 obtenu par torsade sur elle même de l'extrémité d'un prolongement de la boucle 14 de fermeture de l'épingle 3f. Cette torsade 24 définit à son extrémité libre une spire 25 destinée à l'amarrage de l'hameçon 2f.

La monture 1g représentée sur la figure 8 diffère des précédentes en ce que l'hameçon 2g est constitué par un prolongement 26 recourbé vers le haut, de l'extrémité libre de la première branche 9 de l'épingle 3g. En fait, dans cette version, la hampe de l'hameçon 2g se confond avec ladite branche 9 dont il est issu.

Avantageusement, dans tous les cas de figures précités, l'épingle 3 à 3g est réalisée par conformation d'une tige métallique initialement filiforme.

## Revendications

1. Monture à poisson vif (4), destinée notamment à servir d'appât dans la pêche au poisson carnassier, comportant au moins un hameçon en liaison avec des moyens d'attelage du vif (4) sur une ligne (5), caractérisée en ce que les moyens d'attelage sont constitués par une épingle (3 à 3g) formée d'une tige conformée pour définir deux branches (9, 10) dont une première (9) est destinée à être enfilée dans l'une des narines (11) du vif pour ressortir par le dessous de sa bouche (12) à sa partie arrière (10a) tandis que la seconde libre (10) porte à son extrémité libre des moyens de fermeture (14) de ladite épingle (3 à 3g) sur elle-même, mis en oeuvre après attelage du vif (4).

2. Monture selon la revendication 1, caractérisé en ce que l'épingle (3 à 3g) décrit dans une zone sensiblement centrale au moins une spire (13) formant ressort de laquelle sont issues les branches (9, 10) et destinée également à l'amarrage de la ligne (5).

3. Monture selon la revendication 2, caractérisée en ce que les moyens de fermeture de l'épingle (3 à 3g) sont constitués par une zone recourbée de l'extrémité libre de la seconde branche (10) formant une boucle (14) dans un plan perpendiculaire à celle-ci et apte à permettre l'introduction de l'extrémité de la première branche (9) par pression élastique puis sa retenue après relâchement de ladite pression.

4. Monture selon la revendication 3, caractérisée en ce que la bouche de fermeture (14) de l'épingle (3, 3a) comporte un prolongement perpendiculaire (15) dirigé vers le bas se terminant par une queue vrillée (16) destinée à l'amarrage et à la retenue d'un oeillet (8) réalisé à l'extrémité libre de la hampe (6) de l'hameçon (2, 2a).

5. Monture selon la revendication 3, caractérisée en ce que la seconde branche (10) de l'épingle (3c, 3d) comporte au moins une spire intermédiaire (21, 22) formée entre sa spire ressort (13) et la boucle de fermeture (14) et destinée à l'amarrage et à la retenue d'un oeillet (8) réalisé à l'extrémité libre de la hampe (6) de l'hameçon (2c, 2d).

6. Monture selon la revendication 1, caractérisée en ce que la hampe (19) de l'hameçon (17; 2b) est rendue solidaire de la seconde branche (10) de l'épingle (3a, 3b).

7. Monture selon la revendication 2, caractérisée en ce que l'oeillet (8) de la hampe (6) de l'hameçon (2e) est relié à la spire ressort (13) de l'épingle par l'intermédiaire d'un avançon (23) constitué par un fil souple.

8. Monture selon la revendication 3, caractérisée en ce que l'oeillet (8) de la hampe (6) de l'hameçon est relié à l'extrémité d'un avançon rigide (24) obtenu par torsade de l'extrémité d'un prolongement de la boucle de fermeture (14) de l'épingle (3f).

9. Monture selon la revendication 1, caractérisée en ce que l'hameçon (2g) est constitué par un prolongement recourbé vers le haut de l'extrémité libre de la première branche (9) de l'épingle (3g).

10. Monture selon l'une quelconque des revendications précédentes, caractérisée en ce que l'épingle (3 à 3g) est réalisée par conformation d'une tige métallique initialement filiforme.
